# EUROPEAN PATENT SPECIFICATION

(11) **EP 2 921 331 B1**
(45) Date of publication and mention of the grant of the patent: **03.05.2017**
(21) Application number: 14425035.4
(22) Date of filing: 20.03.2014
(51) Int. Cl.: B60K 17/04, B60K 7/00, F16H 7/02, F16H 9/16

(54) **Integrated powertrain assembly for an electric vehicle, in particular for a microcar, and electric vehicle comprising said powertrain assembly**
Integrierte Antriebsstranganordnung für ein Elektrofahrzeug, insbesondere für einen Kleinwagen und Elektrofahrzeug, das diese Antriebsanordnung umfasst
Groupe motopropulseur intégré pour un véhicule électrique, en particulier pour une microcar, et véhicule électrique comprenant ledit groupe motopropulseur

(43) Date of publication of application: 23.09.2015
(73) Proprietor: Askoll Holding S.r.l. a socio unico, 36031 Povolaro di Dueville (VI) (IT)
(72) Inventor: Marioni, Elio, I-36031 Dueville (Vicenza) (IT)
(74) Representative: Botti, Mario

(56) References cited:
- DE-A1- 19 751 371
- FR-A1- 2 713 733
- GB-A- 1 460 628
- US-A- 3 457 797

## Description

### Field of application

The present invention relates to an integrated powertrain assembly for an electric vehicle, in particular for a microcar.

The invention also relates to an electric vehicle comprising a powertrain assembly of the aforementioned type.

The invention finds a useful application in the technological sector of electrical mobility.

### Prior art

As is well known, for some years now, following a growing awareness with regard to environmental issues, so-called "zero emission vehicles" (ZEV) have become more widespread. These vehicles in fact are characterized by the fact that they release practically zero polluting emissions into the atmosphere.

In particular the most common zero emission vehicles are electrically propelled transportation means or electric vehicles.

The characteristic feature of electric vehicles is that have an electric motor which uses as energy source the energy stored in one or more rechargeable batteries and supplied by these to the motor in the form of electric power.

The vehicles of this type result in a drastic reduction in the operating costs borne the user as well as the desired elimination of the polluting emissions.

A major drawback of these types of vehicles, however, consists in the limited autonomy of the batteries.

Electric vehicles of a certain weight, such as motor cars, are therefore still less attractive than the internal-combustion engine vehicles which are currently in circulation, since the energy which can be obtained from the combustion of a few dozen litres of fuel contained in the tank greatly exceeds the energy which can be stored by a series of batteries weighing even as much as several hundred kilograms, with the electric vehicle having a major drawback in terms of autonomy.

For this reason, electrical traction appears to be nowadays in particular interesting for vehicles of limited weight, such as so-called microcars. Microcars or small cars are four-wheel vehicles which, although having a passenger compartment with a relative degree of comfort for the users, have smaller dimensions and a lower power compared to conventional motor cars.

These vehicles, which are specially designed to perform short journeys in an urban environment, are particularly suitable for being operated electrically. Precisely in cities in fact the level of exhaust emissions and noise pollution levels often reach excessively high values and the authorities respond to this critical situation by offering major incentives for the use of zero emission vehicles, such as free parking facilities or the exclusive access to certain urban areas.

Moreover, the excellent acceleration typical of electric motors is particularly suitable for coping with urban traffic conditions.

Despite these advantages only a small number of microcars hitherto in circulation use electrical traction.

The perhaps greatest obstacle to the acquisition of electric microcars is the high purchase cost. If this high cost is partly justified by the components used, in particular the batteries, on the other hand it also negatively affected by the latest progress in the technical sector which has not yet developed efficient and low-cost mechanical solutions which are specifically intended for electrical traction.

Thus, for example, the currently employed powertrain assemblies, which are often directly derived from internal-combustion engine vehicles in terms of location of the components and transmission, while substantially meeting the requirements of the sector, have a relatively high degree of mechanical complexity which is reflected in the production costs as well as the weight and dimensions.

An example of a powertrain assembly for an electric scooter is disclosed for instance in document DE 197 51 371 A1, which shows all the features mentioned in the preamble of claim 1. The technical problem of the present invention is therefore that of devising a powertrain assembly for an electric vehicle which has simplicity and mechanical compactness characteristics which are superior to those of the prior art and which in particular allows easy and low-cost assembly of the component on the finished electric vehicle.

### Summary of the invention

The aforementioned technical problem is solved by a powertrain assembly for an electric vehicle, comprising a housing which contains: at least one electric motor provided with a stator rigidly associated with the housing and a rotor which can be rotationally driven with respect to said stator; and a transmission designed to transmit the movement of the rotor to a drive shaft; said drive shaft comprising an outer portion which projects from the housing and to which a wheel hub is rigidly coupled. The housing comprises at least one hinging point and at least fastening point for connecting it, as an individually movable unit, to the chassis and a shock-absorber group, respectively, of said electric vehicle.

A person skilled in the art will immediately understand how the powertrain assembly described above has a compact structure, incorporating completely the mechanical components necessary for traction on the arm of the mechanical suspension, defined in this case by the extension of the housing.

The structure described not only significantly reduces the production costs of the electric vehicle, but also allows rapid and easy disassembly of the entire powertrain assembly for maintenance or replacement purposes.

The transmission may comprise a first reduction stage comprising at least one first transmission member - for example a belt or a chain - which transmits the movement from the rotor to an intermediate shaft and a second reduction stage comprising at least one second transmission member which transmits the movement from the intermediate shaft to the drive shaft.

Owing to this configuration of the transmission, it is possible to obtain an effective reduction in the movement and consequently a satisfactory torque on the drive shaft, making use at the same time of the longitudinal extension of the housing which will define the arm of the electric vehicle suspension.

Advantageously, said first and second transmission members make take the form of a first and second transmission belt, which are preferably toothed.

The intermediate shaft may be slidably associated with the inside of the housing such as to allow relative tensioning of the first transmission belt and the second transmission belt.

This measure is particularly advantageous since it allows the elimination of the belt-tensioning jockey wheels which are conventionally used in belt or chain transmissions.

In particular, the intermediate shaft may be rotatably mounted around a non-rotatable coaxial shaft, one or both the ends of said coaxial shaft being slidably housed inside a linear guide. This thus provides in a particularly simple and advantageous manner the possibility of sliding of the intermediate shaft in order to achieve relative tensioning of the transmission belts.

The intermediate shaft may be advantageously formed integrally with a second pulley and a third pulley around which the at least one first transmission belt and the second transmission belt are respectively wound.

The electric motor which ensures the movement may be a permanent-magnet synchronous electric motor, said stator being rigidly associated with a fixed shaft, said rotor being an external rotor associated with a drive shaft associated rotatably and coaxially around the fixed shaft.

The permanent-magnet synchronous electric motor is particularly advantageous in the context of the present invention since it ensures a good power density. The motor block associated with the fixed shaft thus has an small axial thickness and limited weight, suitable for allowing integration of the component in the suspension arm of the electric vehicle.

The electric motors may be advantageously two in number, the respective drive shafts being aligned with each other and each supporting a respective first pulley, the first transmission belts being two in number, each of them being wound on one side around a respective first pulley and, on the other side, around a second pulley rigidly connected to the intermediate shaft.

The aforementioned configuration is particularly advantageous since it allows the generation of the power needed for traction of the electric vehicle using small-size motors of the type already used in other technological sectors, such as that of electric household appliances, allowing them to be adapted at a low cost to use for electrical mobility.

It should be noted that the aforementioned first pulleys may be formed integrally with the respective drive shafts. It should also be noted that the drive shafts may be separate or if necessary combined in order to form a single shaft on which a single pulley instead of the two previously suggested pulleys may be present.

The powertrain assembly according to the present invention may also comprise an electronic control unit designed to drive the at least one electric motor, said electronic control unit being incorporated in the powertrain assembly. In particular, the electronic control unit may also be housed inside the housing close to the electric motor or motors. A cable extending from the housing may connect said unit to the batteries located elsewhere on the chassis of the electric vehicle.

In the case where the electric motors are two in number, the electronic control unit will advantageously drive them in synchronism, namely in the case of synchronous motors, supply the two motors with currents at the same frequency so as to obtain rotational speeds which are the same.

The rotor of the synchronous electric motor or motors may advantageously comprise a magnetic ring which is moulded from plastoferrite.

A permanent-magnet motor thus formed, which is produced at a low cost owing to a simple operation involving moulding and injection of the stator, while never having found an application in the specific sector of electrical mobility, has obvious cost-related advantages compared to conventional rare-earth motors.

In order to maximise the efficiency of the motor, the internal stator may have a plurality of poles provided with shaped pole shoes made of sintered magnetic material, for example SMC (soft magnetic composites).

The aforementioned technical problem is also solved by an electric vehicle, preferably a microcar, comprising at least one powertrain assembly of the type described above. The at least one hinging point of said powertrain assembly is hinged on the chassis of the electric vehicle, while the at least one fastening point is coupled to one end of shock-absorber group of the electric vehicle. A driving wheel of said electric vehicle is coupled to the wheel hub.

It can be noted how the driving wheel of the electric vehicle is preferably the rear wheel. The electric vehicle may comprise a single powertrain assembly such that only one wheel of the vehicle is a driving wheel, or a plurality of powertrain assemblies, such that different wheels of the vehicle act as driving wheels. For example two powertrain assemblies may be provided for the traction of both the rear wheels of the vehicle; in this case a central control unit will be required to coordinate the traction on the various wheels.

Further characteristic features and advantages of the present invention will emerge from the description, provided hereinbelow, of a preferred example of embodiment provided by way of a non-limiting example with reference to the accompanying drawings.

### Brief description of the drawings

Figure 1 shows a side view of an electric vehicle, in particular a microcar, according to the present invention, comprising a powertrain assembly according to the invention;
Figure 2 shows a perspective view of the powertrain assembly according to the present invention;
Figure 3 shows a view, from above, of the powertrain assembly according to the present invention;
Figure 4 shows a front view, cross-sectioned along the plane M-M in

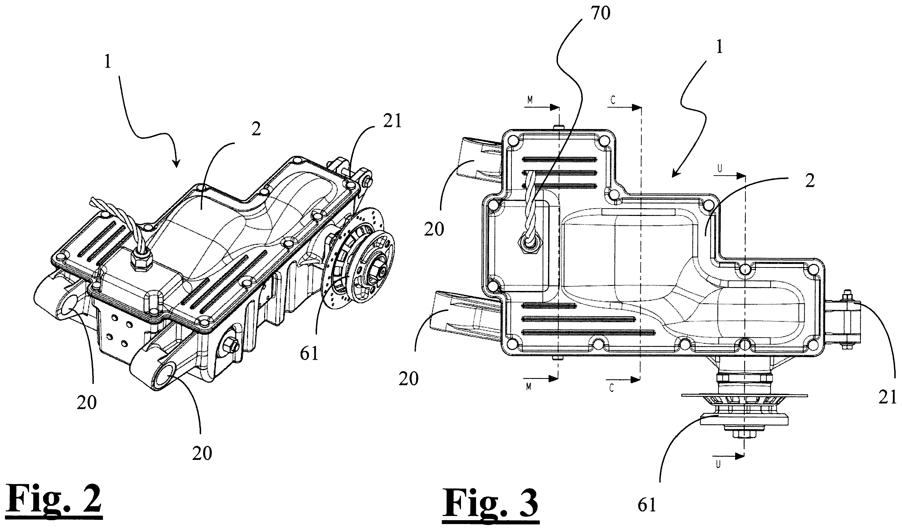

Figure 3, of the powertrain assembly according to the present invention;

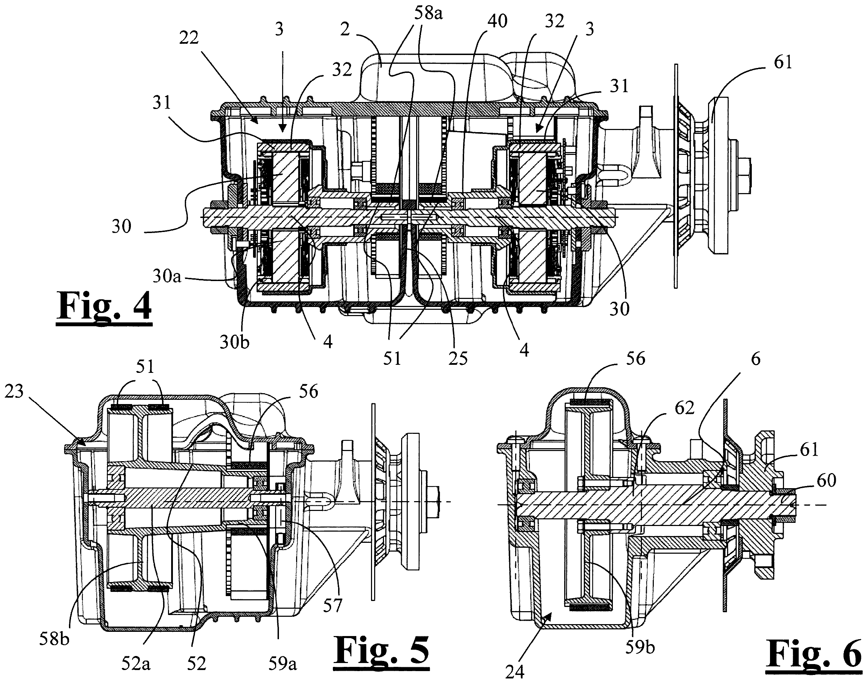

Figure 5 shows a front view, cross-sectioned along the plane C-C in
Figure 3, of the powertrain assembly according to the present invention;
Figure 6 shows a front view, cross-sectioned along the plane U-U in Figure 3, of the powertrain assembly according to the present invention;

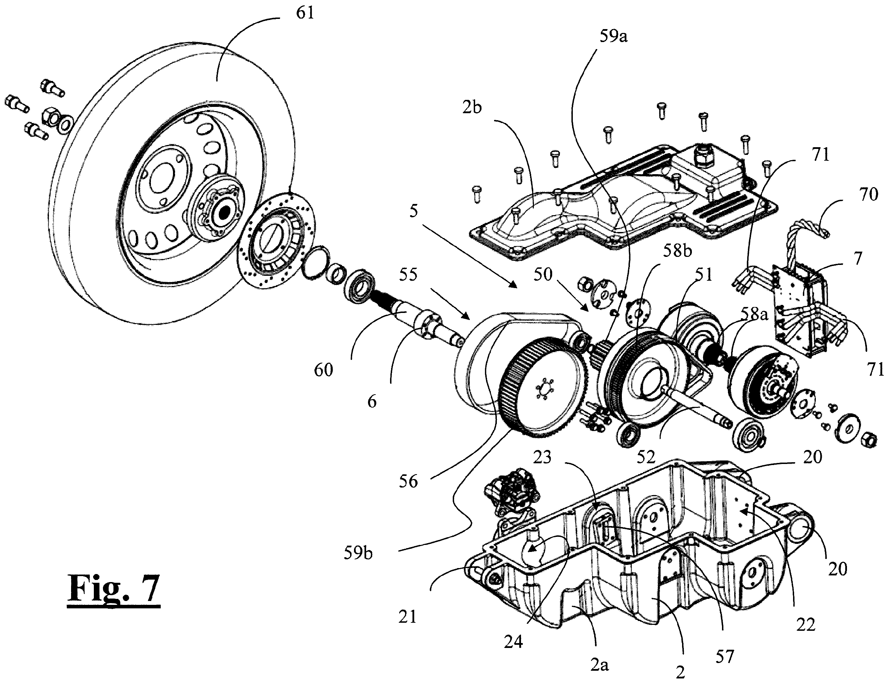

Figure 7 shows an exploded perspective view of the powertrain assembly according to the present invention.

### Detailed description

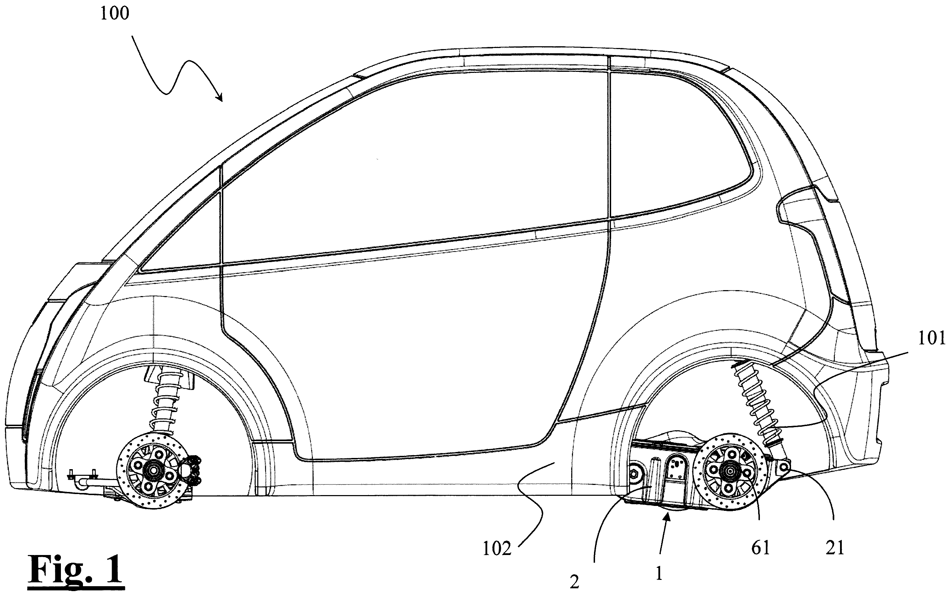

With reference to the attached Figure 1, 100 denotes generally an electric vehicle according to the present invention, which is fitted at the rear with at least one powertrain assembly 1 shown singly in the following Figures 2-7.

In the preferred embodiment described here the electric vehicle 100 is a microcar, namely a four-wheel vehicle with a limited weight, power and maximum speed compared to conventional motor vehicles. By way of a guide, the electric vehicle may have a weight of up to 400 kg, power not greater than 15 kW and maximum speed of no more than 80 km/h, such as to be comparable under Italian law to a heavy quadricycle; or even a weight of up to 300 kg, power not greater 4 kW and maximum speed of no more than 45 km/h, so as to comparable under Italian law to a light quadricycle.

The powertrain assembly 1 is externally enclosed by a housing 2 which contains an electronic control unit 7, two electric motors 3 and a transmission 5 and which has, projecting from it, an outer portion 60 of a traction shaft 6 having, keyed thereon, the wheel hub 61 which supports the rear driving wheel of the electric vehicle 100.

The remaining rear wheel of the electric vehicle 100 may be mounted idle or may also be associated with a similar powertrain assembly 1 mounted on the opposite side to the first assembly so as to provide an electric vehicle with both rear wheels acting as driving wheels.

The housing 2 extends in a substantially longitudinal direction corresponding to the front-to-rear direction of the electric vehicle 100 with which it is associated.

The front end of the housing 2 has two points 20 for hinging with the chassis 102 of the electric vehicle 100, which consist in particular of two arms which project from a front wall of the housing 2 and which support two bushes aligned with each other along a hinging axis inclined by a few degrees with respect to the traction shaft 6.

The rear end of the housing 2 has instead a fastening point 21 which consists in this particular case of two plates with a fork shape which support a fastening pin to which the bottom end of shock-absorber group 101, known per se, of the electric vehicle 100 is coupled.

The housing 2 is formed by a main cup-shaped body 2a which is closed at the top by a flat cover 2b screwed onto it. The housing 2 has internally three successive portions with a depth which is substantially the same, but with a decreasing transverse length, a front portion 22, an intermediate portion 23 and a rear portion 24.

The front portion 22 is passed through transversely by two fixed shafts 4 which are aligned which each other so as to define a continuous axis. One end of these fixed shafts 4 passes through the respective side wall of the housing 2 and is fixed by means of a bolt on the outside of the latter; the opposite end is instead supported by a hole passing through a middle partition 25 which extends upwards from the bottom of the front portion 22 to midway along the height of the housing 2.

A respective electric motor 3 is fixed above each of the fixed shafts 4 and causes rotation of the drive shaft 40 associated rotatably and coaxially around the respective fixed shaft 4. The structures of the two fixed shafts 4, respective electric motors 3 and respective drive shafts 40 are substantially the same and are a mirror image of each other; below therefore the structure and configuration of one of the assemblies will be described, it being understood that the same characteristics are reproduced by the other mirror-image assembly.

The two electric motors 3 are in this particular case two permanent-magnet synchronous electric motors.

The single electric motor 3 is composed in particular of an internal stator 30 and an external rotor 31.

The internal stator 30 has a plurality of poles defined by radial lamination packs 30a around which the electric windings are wound. Sintered end elements made of SMC (soft magnetic composites) which form the pole shoes 30b are positioned at the outer end of each the lamination packs 30a.

The external rotor 31 comprises a main cup-shaped body; the internal surface of the edge of the external rotor 41, facing the air gap, supports a magnetic ring 32 which is made of plastoferrite injected using thermoplastic moulding (injection-moulding) techniques.

The internal stator 30 is keyed, in the vicinity of the side wall of the housing 2, onto the respective fixed shaft 4.

The cup-shaped main body of the external rotor 31, which surrounds the internal stator 30, has its bottom surface directed towards the midplane of the front portion 22. Said bottom surface is connected to a tubular portion which extends away from the internal stator 30 and which is rigidly supported by the drive shaft 40. The drive shaft 40 therefore extends from the electric motor 3 as far as the middle partition 25.

As mentioned above, the drive shaft 40 is rotatably supported by the fixed shaft 4 which passes through it. The drive shaft 40 is structured in particular as a sleeve supported by two ball bearings arranged between it and the fixed shaft 4. The end situated opposite the electric motor 3, which lies in the vicinity of the middle partition 25, is shaped so as to define a first pulley 58a, in particular a toothed pulley, with a diameter smaller than the remainder of the drive shaft 40.

Two first pulleys 58a, which are identical, arranged alongside each other and separated by the middle partition 25, are therefore provided.

Still inside the front portion 22 of the housing 2 the aforementioned electronic control unit 7 is housed inside a special recess formed in the front wall of the said housing. A power supply and signal cable bundle 70 extends from this electronic control unit 7 and passes through the cover 2b of the housing 2 so as to reach the batteries and the control interfaces which are available for the driver. Further cables 71 which are designed to supply power to the windings of the two internal stators 30 described above also extend from the electronic control unit 7.

It will be noted that the electronic control unit 7 will power with the same frequency the two internal stators 30 so as to drive in synchronism the two electric motors 3, namely ensure identical angular speeds for the two rotors 31.

The intermediate portion 23 of the housing 2 is passed by a rotatable intermediate shaft 52 and an inner shaft 52a coaxial with the intermediate shaft.

The inner shaft 52a, which acts as a support for the intermediate shaft 52, is associated with the oppositely arranged side walls of the intermediate portion 23. One of the ends of the inner shaft 52a, which is associated with the outer side wall of the housing 2 (namely with the wall from which the outer portion 60 of the traction shaft 6 projects) is inserted inside a substantially vertical linear guide 57 which allows slight variations in the positioning of the intermediate shaft 52 situated above.

The intermediate shaft 52 is rotatably mounted, by means of two ball bearings which are fixed via their shoulders to the ends of an inner tubular body of the said shaft, over the inner shaft 52a which defines the axis thereof.

The intermediate shaft 52 has a second pulley 58b, adjacent to the inner side wall of the housing 2, and a third pulley 59a, with a smaller diameter than the second pulley, adjacent to the outer side wall of the housing 2. The two pulleys 58a and 59b, which are both toothed, are formed integrally with the intermediate shaft 52; the second pulley 58b has a diameter which is greater than the remaining section of the shaft, and the third pulley 59a has instead a smaller diameter.

It can be noted that the second pulley 58b has on the outer periphery two separate toothed grooves arranged alongside each other. Two first toothed transmission belts 51 are provided, each of said belts kinematically connecting one of the first pulleys 58a to the second pulley 58b, being inserted inside one of the two toothed grooves. Since the diameter of the first pulleys 58a is smaller than that of the second pulley 58b, the first transmission belts 51 perform a reduction of the movement.

The rear portion 24 of the housing 2 is passed through by the drive shaft 6 which projects from it with the outer portion 60. The drive shaft 6, which is rotatably supported by two bearings rigidly connected to the opposite side walls of the housing 2, has an internal portion 62 to which a fourth toothed pulley 59b is rigidly connected by means of screws which connect it to an intermediate flange of the shaft.

A second transmission belt 56, which is also toothed, kinematically connects the third pulley 59a to the fourth pulley 59b. Since the diameter of the third pulley 59a is smaller than that of the fourth pulley 59b, the second transmission belt 56 performs a further reduction of the movement.

As already mentioned above, the outer portion 60 of the drive shaft supports instead a wheel hub 61 known per se.

The components described above form a transmission 5 which transmits the movement of the two electric motors 3 which are driven at the same speed to the drive shaft 6 which supports the driving wheel of the electric vehicle 100.

The transmission comprises: a first reduction stage 50, which is formed by the first pulleys 58a, by the second pulley 58b and by the first transmission belts 51 which kinematically connect them together; and a second reduction stage 55, which is formed by the third pulley 59a, by the fourth pulley 59b and by the second transmission belt 56 which kinematically connects them together.

It should be noted that jockey wheels are not required for tensioning of the belts 51, 56 which form the transmission 5. Owing in fact to the floating positioning of the intermediate shaft 52 which is made possible by the slidable fixing of at least one of the ends of the inner shaft 52a which supports it, the elastic tractional forces acting on the belts may compensate each other, the shaft being arranging so that all three belts are kept tensioned.

It should be noted that any misalignment of the intermediate shaft 52 with respect to the drive shafts 40 and the traction shaft 6 is in all cases small in size and does not affect the transmission of the movement performed by the toothed belts.

Obviously the person skilled in the art may make numerous modifications and variations to the method and device described above, all of which moreover are contained in the scope of protection of the invention, as defined by the following claims.

## Claims

1. Powertrain assembly (1) for an electric vehicle (100), comprising a housing (2) which contains: at least one electric motor (3) provided with a stator (30) which is rigidly associated with the housing (2) and a rotor (31) which can be rotationally driven with respect to said stator (30); and a transmission (5) designed to transmit the movement of the rotor (31) to a traction shaft (6); said traction shaft (6) comprising an outer portion (60) which projects from the housing (2) and to which a wheel hub (61) is rigidly coupled, said housing (2) comprising at least one hinging point (20) and at least one fastening point (21) for connecting it, as an individually movable unit, to the chassis (102) and to a shock-absorber group (101) of said electric vehicle (100), respectively; wherein said transmission (5) comprises a first reduction stage (50) comprising at least one first transmission member, taking the form of a first transmission belt (51), which transmits the movement from the rotor (31) to an intermediate shaft (52), and a second reduction stage (55) comprising at least one second transmission member, taking the form of a second transmission belt (56), which transmits the movement from the intermediate shaft (52) to the traction shaft (6), **characterized in that** said intermediate shaft (52) is slidably associated with the inside of the housing (2) so as to allow relative tensioning of the first transmission belt (51) and the second transmission belt (56), and **in that** said intermediate shaft (52) is positioned in a floating manner so that the elastic tractional forces acting on the belts (51, 56) compensate each other allowing relative tensioning of the first transmission belt (51) and the second transmission belt (56).

2. Powertrain assembly (1) according to Claim 1, wherein said first and second transmission belts (51, 56) are toothed belts.

3. Powertrain assembly (1) according to Claim 1, wherein said intermediate shaft (52) is rotatably mounted around a non-rotatable coaxial inner shaft (52a), at least one end of said coaxial shaft being slidably housed inside a linear guide (57).

4. Powertrain assembly (1) according to Claim 3, wherein said intermediate shaft (52) is formed integrally with a second pulley (58b) and a with a third pulley (59a) around which the at least one first transmission belt (51) and the second transmission belt (56) are respectively wound.

5. Electric vehicle (100) comprising at least one powertrain assembly (1) according to one of the preceding claims, the at least one hinging point (20) of said powertrain assembly (1) being hinged with the chassis (102) of the electric vehicle (100), the at least one fastening point (21) being coupled to one end of a shock-absorber group (101) of the electric vehicle (100), the wheel hub (61) being coupled to a driving wheel of said electric vehicle (100).

## Patentansprüche

1. Antriebsstranganordnung (1) für ein Elektrofahrzeug (100) mit einem Gehäuse (2), das mindestens einen Elektromotor (3), der einen mit dem Gehäuse (2) starr verbundenen Stator (30) und einen Rotor (31) aufweist, der drehbar in Bezug auf den Stator (30) angetrieben werden kann; und ein Getriebe (5) aufnimmt, das dazu ausgelegt ist, die Bewegung des Rotors (31) auf eine Antriebswelle (6) zu übertragen; wobei diese Antriebswelle (6) einen Außenbereich (60) aufweist, der aus dem Gehäuse (2) herausragt und an den eine Radnabe (61) fest gekoppelt ist, wobei das Gehäuse (2) mindestens einen Anlenkpunkt (20) und mindestens einen Befestigungspunkt (21) aufweist, um es als einzeln bewegliche Einheit jeweils mit dem Chassis (102) und mit einer Stoßdämpfergruppe (101) des Elektrofahrzeugs (100) zu verbinden; wobei das Getriebe (5) eine erste Untersetzungsstufe (50), die mindestens ein erstes Übertragungsglied aufweist, das in Form eines ersten Übertragungsriemens (51) vorliegt, der die Bewegung von dem Rotor (31) auf eine Zwischenwelle (52) überträgt, und eine zweite Untersetzungsstufe (55) aufweist, die mindestens ein zweites Übertragungsglied aufweist, das in Form eines zweiten Übertragungsriemens (56) vorliegt, der die Bewegung von der Zwischenwelle (52) auf die Antriebswelle (6) überträgt, **dadurch gekennzeichnet, dass** die Zwischenwelle (52) eine Verschiebebewegung ermöglichend dem Inneren des Gehäuses (2) zugeordnet ist, um ein relatives Spannen des ersten Übertragungsriemens (51) und des zweiten Übertragungsriemens (56) zu ermöglichen, und dass die Zwischenwelle (52) schwimmend angeordnet ist, so dass die auf die Übertragungsriemen (51, 56) einwirkenden elastischen Traktionskräfte einander kompensieren, wodurch ein relatives Spannen des ersten Übertragungsriemens (51) und des zweiten Übertragungsriemens (56) ermöglicht wird.

2. Antriebsstranganordnung (1) nach Anspruch 1, **dadurch gekennzeichnet, dass** die ersten und zweiten Übertragungsriemen (51, 56) Zahnriemen sind.

3. Antriebsstranganordnung (1) nach Anspruch 1, **dadurch gekennzeichnet, dass** die Zwischenwelle (52) drehbar um einen nicht drehbaren koaxialen Innenschaft (52a) gelagert ist, wobei mindestens ein Ende des koaxialen Schaftes innerhalb einer Linearführung (57) verschiebbar aufgenommen ist.

4. Antriebsstranganordnung (1) nach Anspruch 3, **dadurch gekennzeichnet, dass** die Zwischenwelle (52) integral mit einer zweiten Rolle (58b) und mit einer dritten Rolle (59a) ausgebildet ist, um die der mindestens eine erste Übertragungsriemen (51) und der zweite Übertragungsriemen (56) jeweils gewunden sind.

5. Elektrofahrzeug (100) mit mindestens einer Antriebsstranganordnung (1) nach einem der vorhergehenden Ansprüche, wobei der mindestens eine Anlenkpunkt (20) der Antriebsstranganordnung (1) an dem Chassis (102) des Elektrofahrzeugs (100) gelenkverbunden ist, wobei der mindestens eine Befestigungspunkt (21) mit einem Ende einer Stoßdämpfergruppe (101) des Elektrofahrzeugs (100) gekoppelt ist, und wobei die Radnabe (61) mit einem Antriebsrad des Elektrofahrzeugs (100) gekoppelt ist.

## Revendications

1. Ensemble groupe motopropulseur (1) d'un véhicule électrique (100), comprenant un carter (2) qui contient: au moins un moteur électrique (3) doté d'un stator (30) qui est associé de manière rigide au carter (2), et d'un rotor (31) qui peut être entraîné en rotation par rapport audit stator (30) ; et une transmission (5) conçue de façon à transmettre le déplacement du rotor (31) à un arbre de traction (6) ; ledit arbre de traction (6) comprenant une partie extérieure (60) qui fait saillie à partir du carter (2) et à laquelle est accouplé de manière rigide un moyeu de roue (61), ledit carter (2) comprenant au moins un point d'articulation (20) et au moins un point de fixation (21) destinés à le connecter, en tant qu'unité mobile de manière individuelle, au châssis (102), et à un groupe amortisseur (101) dudit véhicule électrique (100), respectivement; dans lequel ladite transmission (5) comprend un premier étage de réduction (50) qui comprend au moins un premier élément de transmission, qui prend la forme d'une première courroie de transmission (51), qui transmet le déplacement du rotor (31) à un arbre intermédiaire (52), et un deuxième étage de réduction (55) qui comprend au moins un deuxième élément de transmission, qui prend la forme d'une deuxième courroie de transmission (56), qui transmet le déplacement de l'arbre intermédiaire (52) à l'arbre de traction (6), **caractérisé en ce que** ledit arbre intermédiaire (52) est associé de manière coulissante à l'intérieur du carter (2) de façon à permettre une tension relative de la première courroie de transmission (51) et de la deuxième courroie de transmission (56), et **en ce que** ledit arbre intermédiaire (52) est positionné de manière flottante de telle sorte que les forces de traction élastiques qui agissent sur les courroies (51, 56), se compensent en permettant une tension relative de la première courroie de transmission (51) et de la deuxième courroie de transmission (56).

2. Ensemble groupe motopropulseur (1) selon la revendication 1, dans lequel lesdites première et deuxième courroies de transmission (51, 56) sont des courroies crantées.

3. Ensemble groupe motopropulseur (1) selon la revendication 1, dans lequel ledit arbre intermédiaire (52) est monté en rotation autour d'un arbre intérieur coaxial non rotatif (52a), une extrémité au moins dudit arbre coaxial étant logée de manière coulissante à l'intérieur d'un guide linéaire (57).

4. Ensemble groupe motopropulseur (1) selon la revendication 3, dans lequel ledit arbre intermédiaire (52) est formé d'une pièce avec une deuxième poulie (58b) et avec une troisième poulie (59a) autour desquelles la ou les premières courroies de transmission (51) et deuxièmes courroies de transmission (56), sont enroulées de manière respective.

5. Véhicule électrique (100) comprenant au moins un ensemble groupe motopropulseur (1) selon l'une quelconque des revendications précédentes, le ou les points d'articulation (20) dudit groupe motopropulseur (1) étant articulés avec le châssis (102) du véhicule électrique (100), le ou les points de fixation (21) étant accouplés à une extrémité d'un groupe amortisseur (101) du véhicule électrique (100), le moyeu de roue (61) étant accouplé à une roue d'entraînement dudit véhicule électrique (100).
